Europäisches Patentamt

European Patent Office

Office européen des brevets

(11) Numéro de publication: **0 340 141**
**A1**

(12) **DEMANDE DE BREVET EUROPEEN**

(21) Numéro de dépôt: **89500018.0**

(51) Int. Cl.⁴: $H\ 02\ K\ 49/04$

(22) Date de dépôt: **27.02.89**

(30) Priorité: **29.04.88 ES 8801350**
**02.12.88 ES 8803581**

(43) Date de publication de la demande:
**02.11.89 Bulletin 89/44**

(84) Etats contractants désignés:
**AT CH DE FR GR IT LI SE**

(71) Demandeur: **Camino Nunez, Antonio**
**P.I. El Pino, Nave 12 Parcela 12**
**E-41016 Sevilla (ES)**

(72) Inventeur: **Camino Nunez, Antonio**
**P.I. El Pino, Nave 12 Parcela 12**
**E-41016 Sevilla (ES)**

(74) Mandataire: **Alonso Langle, Emilio Juan**
**c/o UDAPI, S.L. Segre, 18, Bajo**
**E-28002 Madrid (ES)**

(54) **Mécanisme de frein électrique pour véhicules lourds.**

(57) Dans la carcasse (1) les cols (7) de montage des masses magnétiques et de passage des axes (13) porteurs des pignons (12) engrénant avec les couronnes (10), émergent des pièces de configuration circulaire (6) qui sont montées amovibles sur les embouchures latérales (5) de la carcasse citée (1). Chaque pièce (6) incorpore intérieurément une paire de bras parallèls (8) finissant en des têtes cylindriques (9) sur lesquelles on monte la pièce sur laquelle se fixent précisément les couronnes (10). L'invention concerne aussi la configuration des masses magnétiques montées sur les colus (7).

FIG.-1

EP 0 340 141 A1

**Description**

**MECANISME DE FREIN ELECTRIQUE POUR VEHICULES LOURDS**

BUT DE L'INVENTION

La présente invention est rélative à un mécanisme de frein électrique pour véhicules lourds, qui peut être appliquée aux camions pour être utilisée comme moyen de rétention de ce type de véhicules en descendant des pentes et peut substituer le frein normal du véhicule ainsi empêchant le surchauffément et l'inutilisation du dit frein conventionnel.

ANTECEDENTS DE L'INVENTION

Les véhicules lourds, c'est-à-dire, ceux qui ont un grand tonnage, qui roulent en descendant des pentes, acquièrent une très élevée énergie cinétique, et ceci rend difficile de freiner ce type de véhicules, de sorte que, en utilisant les freins conventionnels, à cause de cette énorme énergie cinétique accumulée, il va se produire un surchauffément de ceux freins, même devenant inutilisables et en consequence devenant impossible de freiner totalement le véhicule.

Pour éviter ces problèmes il est sorti au marché le frein électrique actuellement incorporé dans tous ceux véhicules lourds, freins électriques qui sont étrangers en leur fonctionnément et structure aux freins conventionnels étant donné que ceux-là agisent comme moteurs qui essayent de faire tourner en sens contraire à celui de la marche à des volants en rapport avec des axes des roues, généralement les axes derrières non-motrices.

Ces groupes électriques accomplissent la fonction pour laquelle ils ont été prévus d'une manière efficace. Cependant, et à cause des énormes efforts auxquels ils sont soumis, il se produit des fréquents cassements en des organes déterminés ou éléments qui forment partie des dits freins électriques, et il devient nécessaire pour éviter ce problème d'appliquer tous les efforts sur une seule couronne qui devait être évidemment surdimensionée pour empêcher le brisement.

Après, des freins électriques sont sortis au marché fondés dans le principe dont on a parlé auparavant, c'est-à-dire, dans des masses magnétiques qui essayaient de faire tourner en sens contraire les axes des roues, ce qui provoquait le freinage; et ceux deuxièmes freins incorporaient deux couronnes pour pouvoir ainsi répartir les efforts.

Et bien, entre ces deuxièmes freins se trouve celui qu'on revendique dans le modèle d'utilité espagnol 275.521, du même demandant, de manière que structuralément dans le frein du dit modèle 275.521 on prévoyait que les manches correspondentes ou éléments tubulaires dans lesquels on loge les paliers mêmes sur lesquels montent les roues du véhicule, sont fixées à la carcasse centrale du dispositif même ou frein par des vis, exactément sur la partie frontale de ladite carcasse, et on prévoit aussi dans ce modèle d'utilité de souder sur les bouts des paliers des couronnes respectives engrenant perpendiculièment sur des pignons dont les axes ont les masses accouplées et celles-ci, oppossées aux bobines correspondants, provoquent l'effet de rétention du véhicule, parce-que lesdites masses magnétiques ont tendance à faire tourner en sens contraire les axes correspondants sur lesquels on a monté le frein même ou dispositif.

En ce modèle on prévoit aussi que la carcasse ait des cous perpendiculiers au plan déterminé par les fronts du montage des paliers, ces cous n'étant pas en ligne, ce qu'empêchera que chaque pignon engrénant avec sa couronne respective interfiert avec l'autre.

Il n'y a aucune doute que cette structure de frein revendiquée dans le modèle d'utilité 275.521 offre une série d'avantages en référence avec les traditionnels, qui ont été commentés auparavant, comme c'est celle d'avoir les efforts répartis sur deux couronnes, ce que previent leur cassement, ainsi qu'une autre série d'avantages qu'à present ce n'est pas le cas de référer, mais qu'elle offre sans aucune doute.

Cependant, le problème qui presénte ce frein-ci c'est que, en cas de panne du même, il faut démonter tout l'ensemble des axes du camion, ce qui est coûteux, tant du point de vue économique comme du effort physique, et aussi lent, pour la considérable perte de temps qu'on se produit quand on fait des démontages tels.

Dans ces types de freins électriques, la force magnétique à appliquer sur les disques ou volants est originée par des bobines magnétiques qui sont montées téléscopiquément sur un nucléus, fermant ceci à travers d'une plaque polaire, d'une manière telle que tout l'ensemble reste monté sur une plaque de support, porteuse de tant de plaques polaires et, par conséquence, de nucléus magnétiques comme il devient nécessaire.

A cause de la structuration de ladite plaque de support et naturellement, de la conception de l'ensemble du dispositif magnetique cité, la circulation de l'air par l'intérieur de l'ensemble est nulle, et on donne mê me le cas où le disque extérieur ou volant auquel on doit appliquer les forces magnétiques originées par l'ensemble cité, incorpore des ailes qui ont pour but de produire une ventilation, même si elles n'agissent pas comme un ventilateur, et elles essayent de créer un vide à l'intérieur de la boîte qui forme la plaque de support, et ceci aboutit en une force de rétention qui fait que le camion, alors qu'il fonctionne normalement et le frein électrique n'est pas appliqué, consomme assez de combustible, étant donné qu'on est en train de créer un vide dans une boîte fermée et sans aucune circulation d'air, et ce vide logiquement absorbéra une quantité d'énergie qui doit être fournie par le moteur du véhicule et par conséquent le perdre comme rendement né de celui-ci.

En d'autres mots, qu'en rapport avec les dessins des ensembles magnétiques utilisés pour activer les dispositifs ou mécanismes correspondents aux freins électriques utilisés dans des véhicules lourds, on perd une grande quantité d'énergie, avec la conséquente diminution dans le rendement du véhicule et naturellement, une majeur consommation de combustible, et tout ceci, en plus, répercute sur les plaques de support en les courbant à cause de la manque de ventilation appropriée.

DESCRIPTION DE L'INVENTION

Le mécanisme de frein électrique proposé par l'invention a été conçu pour résoudre ces problèmes avec pleine satisfaction, en se basant pour ceci en les mêmes principes de fonctionnement que celui qui correspond au modèle d'utilité cité 275.521du même demandant, toute fois qu'en présentant une série d'innovations avec lesquelles n'importe quel type de panne qu'il se produisse dans l'ensemble du frein ne demandera pas qu'il soit démonté en rélation aux axes du véhicule, mais qu'en devissant tout simplement des couvercles, il est possible d'accéder à tout le mécanisme intérieur, c'est-à-dire, où l'on trouve les couronnes prévues, ainsi que les pignons et les autres éléments. Ce n'est pas donc nécessaire d'éfectuer le démontage, avec la conséquente économie de temps, des coûts économiques, etc.

D'une manière plus concrète, le mécanisme proprement dit présente ce qu'on peut considérer comme des faces latérales, c'est-à-dire, celles qui sont perpendiculières aux faces frontales où vont montés les paliers, totalement ouvertes par moyen d'amples orifices, et sur celles-ci on a visé des pièces circulaires respectives qui se prolonguent par une de leur faces en le cou correspondant pour le montage des masses magnétiques, alors que dans la face intérieur ou opposée on a prévu des prolongations avec la forme de deux bras qui ont un rapport paralel entre eux et finissent en deux frettes ou pièces cilindriques alignées axialément et en sens tranvérsale par rapport avec l'axe longitudinale, de forme qu'entre chaque paire de ceux corps cilindriques ou anneaux il reste en place la pièce à la qu'on engrène le pignon respectif.

Cette nouvelle conception structurelle du mécanisme ou frein électrique, permet qu'avec le seul démontage de cettes pièces complémentaires montées sur les latérales de la carcasse, on accède directement à tout le mécanisme intérieur, et on peut échanger les pièces inutilisées sans étre obligé de démonter tout l'ensemble en rapport avec les axes du camion, ni de l'emmener dans un atelier de réparations.

D'un autre côté, en rélation avec l'ensemble ou masses magnétiques pour activer le frein électrique cité, ou un autre type de frein, elle présente une structure très simple grâce principalément à la particulière configuration de la plaque de support de l'ensemble magnétique, c'est-à-dire, des bobines magnétiques avec leurs correspondants nucléus de montage de celles-ci.

Cette plaque de support originale présente un cou concentrique et cilindrique d'un diamètre considérable, à travers duquel on montera l'ensemble à la carcasse générale et statique de ce qui forme le frein électrique du véhicule, alors que dans la couronne determinée entre ledit nucléus et le bord périphérique de la plaque dont on parle on a prévu une pluralité de boîtés en correspondance avec une des faces, boîtés qui sont circulaires et dans lesquels sont logés les correspondants nucléus sur lesquels vont montés les bobines magnétiques, et celles-ci se ferment avec la plaque polaire respective.

Entre ces boîtés de montage et les nucléus et bobines magnétiques respectives, il y a des nerfs intercalés pour le raidissement et des orifices à travers desquels il circuléra l'air.

On a prévu aussi de la même façon et grâce à une particulière configuration du disque ou volant du frein, d'obténir un ensemble à travers duquel il est possible d'avoir une circulation intérieure d'air, permetant la réfrigération continue des bobines magnétiques, ce qu'évitéra qu'elles n'atteignent les hautes températures dans les moments de freinage qu'elles normalément atteignent avec des dispositifs conventionnels, et prévenant avec ceci que les plaques de support ne se courbent comme il arrive à présent, ce qu'augmente le rendement de freinage grâce à la diminution de la température.

Il faut remarquer le fait que quand un véhicule lourd est en train de fonctionner normalément, c'est-à-dire, dans les moments de non-freinage, alors le volant ou disque n'est pas obligé de créer aucun type de vide dans la boîte formée dans les freins actuels, étant donné que ceux-ci sont hermétiquement fermés, et tout ceci aboutit dans une rétention pratiquement nulle parce-que le volant est en train d'absorber par ses propres moyens et d'une manière normale l'air à travers des orifices prévus dans la plaque de support, et il n'est pas forcé d'augmenter ou diminuer la consommation de combustible, ou de perdre de l'énergie pour créer ce vide ou celle absorption d'air, ce qu'en definitive, augmente le rendement du véhicule.

DESCRIPTION DES DESSINS

Pour compléter la description qu'on est en train de faire et à l'objet d'aider une méilleure compréhension des caractéristiques de l'invention, on accompagne à cette mémoire descriptive, comme partie intégrale de la même, une feuille unique de plans dans laquelle on a représenté avec caractère illustratif et non limitatif, le suivant:

La figure 1.- Montre une représentation générale de la perspective, selon un dépiècement en explosion, du frein électrique objet de l'invention.

La figure 2.- Montre une vue en plante de la plaque de support formant partie de l'ensemble magnétique correspondant au frein électrique de l'invention.

La figure 3.- Montre une vue en coupe diamétrale de la plaque magnétique représentée dans la figure précédente, incluant en plus un nucléus avec la correspondante bobine et la plaque de fermeture en position de montage sur ladite plaque de support.

La figure 4.- Montre, finalement, une vue latérale de ce que le disque ou volant de freinage est sur lequel agît précisément l'ensemble magnétique représenté dans les deux figures précédentes.

## REALISATION PREFERENTE DE L'INVENTION

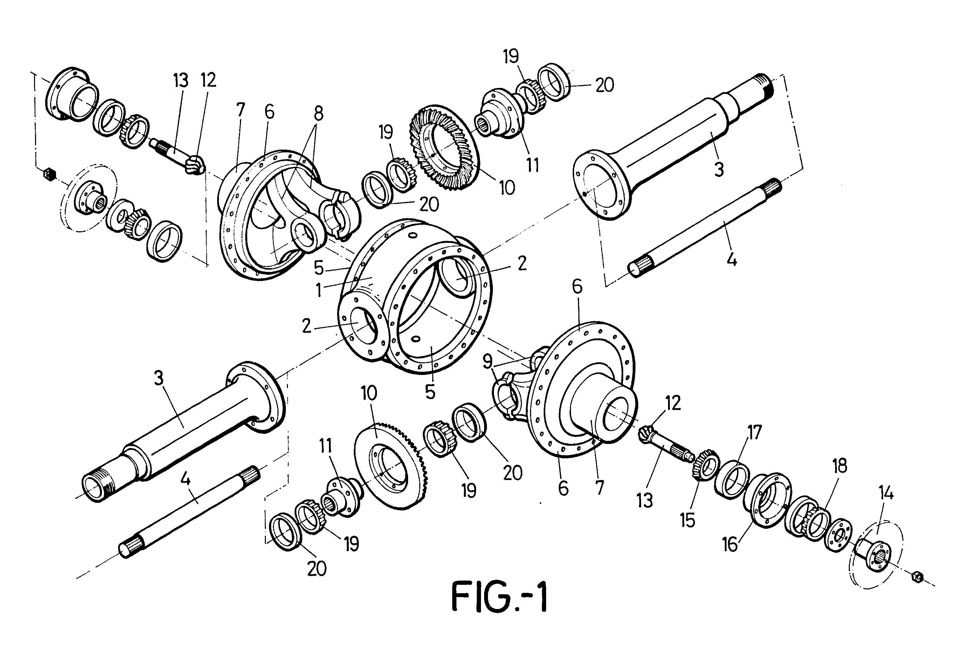

A la vue des figures, en spéciale la figure 1, on peut observer le mécanisme formant le frein électrique objet de l'invention, qui comprend une carcasse (1) de configuration essentiellement cylindrique et qui possède deux bouches opposées (2) sur lesquelles on monte les respectives manches tubulaires (3) dans lesquelles on a logé précisément les paliers (4) sur lesquels on a monté les respectives roues du véhicule. C'est-à-dire, que les bouts des manches tubulaires (3) forment le moyen de montage de chaque axe et les paliers (4) determinent le moyen de transmission pour la rotation de cettes roues.

La carcasse (1) compte en plus avec deux grandes embouchures (5) d'un grand diamètre, comme on peut observer dans la figure 1 même, à chacune desquelles on ajoute une pièce de configuration circulaire (6), le tout avec des vis, de manière que cettes pièces (6) se prolonguent par sa face considérée come extérieure en un cou (7), alors que par sa face intérieure elles se prolonguent en des bras (8) en rapport parallèle entre eux et finissent en des anneaux respectifs ou des portions cylindriques (9) qui forment des supports correspondants, comme on décrira plus avant.

Les cous (7) des dites pièces circulaires (6) forment à l'extérieur le moyen permettant de mettre en position les correspondantes masses magnétiques, restant celles-ci opposées à leurs respectifs disques magnétiques.

Dans l'intérieur de la carcasse (1) restent logés les bras (8) des pièces circulaires (6) et en conséquence les frettes ou portions cylindriques (9). De la même façon, dans l'intérieur de cette carcasse (1) restent logées deux couronnes (10) opposées entr'elles et accouplées aux paliers (4) par des pièces ou couvettes (11) formant un ensemble solide. Ces couronnes (10) engrènent avec des pignons respectifs (12) sans interférer entr'eux-mêmes, comme conséquence de que lesdits pignons (12) ne gardent pas d'alinéation, ainsi que le montage des components associés à celui-ci.

Les pignons cités (12) forment partie d'un axe (13), auquel on accouple le correspondant disque magnétique (14)qui s'oppose, selon le plan parallèle, à la masse magnétique montée sur chaque cou extérieur (7) des pièces (6), tout ceci en collaboration avec une couronne (15), la carcasse (16), les anneaux (17), les roulements à boules (18), etc., comme on remarque dans la figure avec clarté.

D'autre part, dans les portions cylindriques ou frettes (9) que celles-ci forment, on a monté des coussinets respectifs (19), chacun desquels va être mis en position avec la frette ou portion cylindrique correspondante (9), en se complétant avec des cerceaux (20).

D'un autre côté, dans les cous (7) cités on a monté les masses ou ensembles magnétiques, lesquels sont constitués à partir d'une plaque de support (21), de configuration circulaire et de peu de grosseur, qui a un ample orifice concentrique (22) duquel on dérive un cou (23) avec des orifices (24) pour le montage de la même sur le cou cité (7) du frein électrique.

Cette plaque (21) a, dans une de ses faces, une pluralité de cannéléments ou boîtés (25) de petite profondeur et de contour circulaire, de forme qu'en chacun de ces boîtés on a monté un nucléus (26) sur lequel on montéra à son tour une bobine magnétique (27) qu'on ferme avec une plaque polaire (28).

C'est-à-dire, tous les boîtements (25) seront fournis du correspondant ensemble formant le nucléus (26), la bobine magnétique (27) et la plaque polaire ou de fermeture (28), en formant avec la propre plaque (21) l'ensemble magnétique que fera activer ou agira sur le propre disque ou volant de freinage (14).

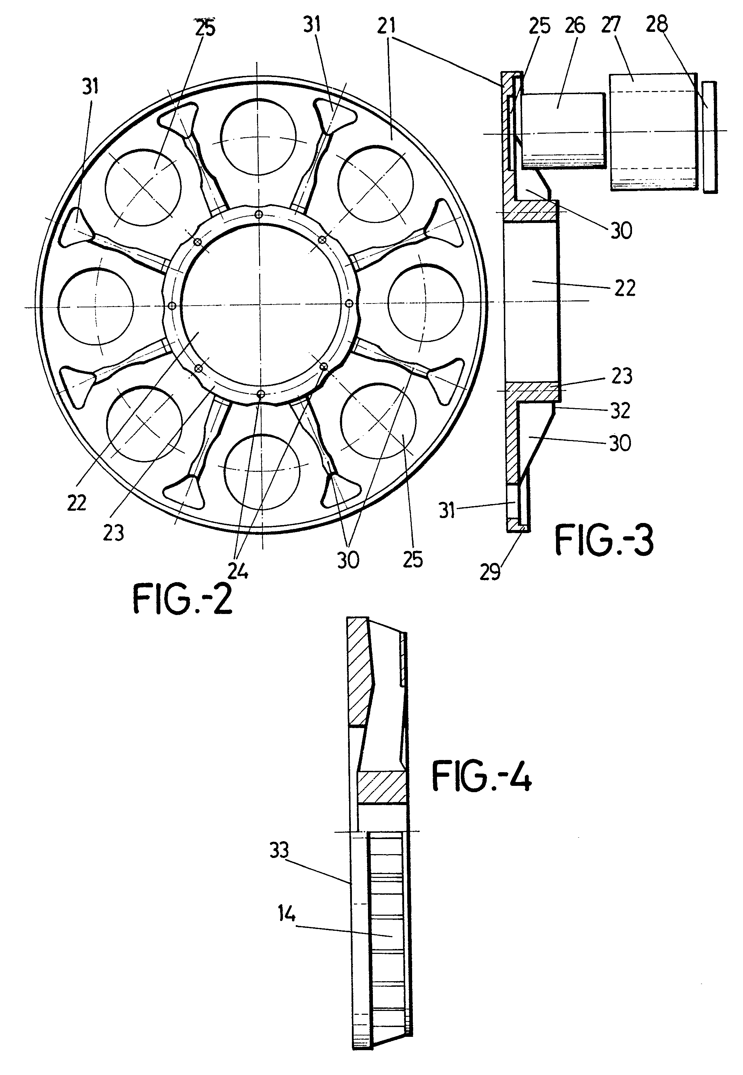

La plaque (21) compte avec un cannélément périphérique (29), alors qu'entre les recés ou boîtés (25) on a prévu des nerfs de renforçage (30) ainsi comme des orifices passants (31), avec une partie extrême intérieure en biseau arrondi (32), comme on voit sur la figure 3.

Cette structuration permet que la plaque (21), avec tous ses éléments associés à la méme, puisse être monté sur l'ensemble du dispositif de frein décrit auparavant, gráce à que celle-là compte avec des orifices (24) qui vont coïncider avec l'agraffément du frein méme et ainsi on pourra monter celui-ci, avec l a particularité que le cou (22) détermine un orifice ou passage d'un considérable diamètre où on accouple les câbles d'interconnéction entre les différentes bobines.

Cet ensemble magnétique restera opposé, comme on a déjà indiqué, au disque ou volant (14) accouplé à l'axe correspondant (13) du mécanisme de freinage, volant (14) fourni par sa partie postérieur d'un front (34) qui est celui qui reste opposé précisament aux plaques polaires ou de fermeture (28), de sorte que quand le magnétisme se produit, ledit front (33) est celui qui produira le freinage du plat ou volant même (14) ce que, comme il est uni au correspondant axe du mécanisme de freinage, produira le freinage des roues.

Selon la structuration décrite, on montéra le mécanisme sur les axes correspondants aux roues non-motrices des véhicules lourds, tels que des camions de grand tonnage, de sorte que cettes roues monteront sur les paliers de transmission (4) et en conséquence sur les manches (3), fixées précisément à la carcasse générale (1) du mécanisme, permettant la rotation des dites roues comme conséquence des engrenéments originés entre les pignons (12) et les couronnes (10).

Cependant, quand on veut activer ce mécanisme ou frein électrique, essayant de rétenir un véhicule en descendant des pentes, il suffira au chauffeur d'actionner le commande correspondant agissant sur les masses magnétiques disposées sur les cous (7), et cettes masses créeront une force magnétique et retendront aux disques magnétiques (14) et cette rétention se déplacera à l'axe (13) et en conséquence aux pignons (12), et cette rétention répercutéra sur les couronnes (10) et en conséquence sur les paliers (4), étant donné que tout ceci est en rapport et engrené entre soi-même de la manière décrite, et tout ceci fait que cette rétention soit transmise logiquement aux roues du véhicule et que celui-ci s'arrête avec ce mécanisme, sans avoir bésoin d'utiliser les freins conventionnels ou normales.

**Revendications**

1ère.- Mécanisme de frein électrique pour véhicules lourds, qu'étant formé à partir d'une carcasse (1) sur laquelle on détermine deux embouchures (2) opposées à lesquelles vont fixées les manches tubulaires correspondantes (3) qui logent les paliers (4) de transmission pour l'accouplément des roues mêmes du véhicule, et dont les paliers (4) s'accouplent par les but intérieur à des couronnes (10) engrénant avec des pignons (12) prévus sur l'extrème des axes (13), passant à travers de cous (7) perpendiculiers à l'axe déterminé par les embouchures qui ont été citées en premier lieu, et dont les axes (13) des pignons (12) s'accouplent les disques magnétiques correspondents (14) qui restent opposés à des masses magnétiques montées sur les cous (7) cités auparavant, se caractérisant essentiellément parceque les dits cous (7) de montage des masses magnétiques et de passage des axes (13), porteurs des pignons (12) qui engrènent avec les couronnes (10), se dérivent de la face intérieure des pièces respectives (6) de configuration générale circulaire et qu'on fixe, avec caractère démontable, sur des ouvertures (5) opposées et prévues à cet effet sur la carcasse même (1) perpendiculièrement aux embouchures (3) de passage des paliers de transmission (4), pièces (6) qui présentent dans leur face intérieure, chacune d'elles, une paire de bras (8) parallèls entre-eux mêmes, finissant en des portions cylindriques (9) avec la forme de frettes, entre lesquels il reste montée la pièce dont les couronnes vont précisément fixées, avec l'interposition des coussinets (19) respectifs qui sont rétenus précisément dans les frettes ou portions cylindriques (9) formant les buts des dites paires de bras intérieurs (8) des pièces circulaires (6) fixées sur les amples ouvertures circulaires (5) de la carcasse (1).

2ème.- Mécanisme de frein électrique pour véhicules lourds, selon la revendication 1ère, caracterisé par ce que les masses magnétiques pour activer les volants ou disques magnétiques (14), qu'on constitue par moyen de des bobines magnétiques (27) montées sur des nucléus correspondants (26), présentent la particularité que le dit ensemble de nucléus (26) et bobines magnétiques (27) vont montés sur une plaque de support (21) de configuration circulaire, affectée dans une de ses faces par une pluralité de récés (boîtés) (25) de petite profondeur, où montent précisément lesdits nucléus (26) et bobines magnétiques (27) avec la plaque de fermeture ou polaire (28) de chacun de ces ensembles; étant prévu qu'alternativément avec lesdits boîtés (25) la plaque (21) compte avec des nerfs (30) et des orifices passants (31) pour airéer les bobines magnétiques mêmes (27), et avec la particularité, en plus, de ce que la plaque (21) ait dans son centre un ample orifice (22) duquel on dérive un cou (23) avec des orifices (24) pour le montage de l'ensemble sur le cou (7) de la carcasse générale (1) du frein électrique, restant opposé l'ensemble des bobines magnétiques (27) au volant respectif (14) qui doit être freiné.

FIG-1

FIG.-2

FIG.-3

FIG.-4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 176 326 (THOMPSON) <br> * page 1, lignes 41-47; page 1, ligne 79 - page 2, ligne 10; figure 1 * <br> --- | 1 | H 02 K 49/04 |
| A | EP-A-0 059 691 (FRENOS ELECTRICOS UNIDOS) <br> * page 5, lignes 1,2; page 5, ligne 26 - page 6, ligne 1; page 6, lignes 12-14; figures 1,2 * <br> ----- | 1 | |

DOMAINES TECHNIQUES RECHERCHES (Int. Cl.4)

H 02 K 49/00
H 02 K 7/00
B 60 T 13/00

Le présent rapport a été établi pour toutes les revendications

| Lieu de la recherche | Date d'achèvement de la recherche | Examinateur |
|---|---|---|
| BERLIN | 28-07-1989 | LEOUFFRE M. |